# EUROPEAN PATENT APPLICATION

(11) **EP 4 350 357 A1**
(43) Date of publication of application: **10.04.2024**
(21) Application number: 21943990.8
(22) Date of filing: 31.05.2021
(51) Int. Cl.: G01N 35/00

(54) **REAGENT COOLING BOX AND AUTOMATIC ANALYSIS DEVICE COMPRISING SAME**

(71) Applicant: HITACHI HIGH-TECH CORPORATION, Tokyo 105-6409 (JP)
(72) Inventor: SHIMIZU, Hayato, Tokyo 100-8280 (JP); YAMAGATA, Toshiki, Tokyo 105-6409 (JP); MAKINO, Yoko, Tokyo 105-6409 (JP)
(74) Representative: Mewburn Ellis LLP
(86) International application number: PCT/JP2021/020592
(87) International publication number: WO 2022/254478

(57) **Abstract**

A reagent cooling box of the present disclosure includes a reagent disk configured to hold a plurality of reagent vessels that holds reagents, a container configured to store the reagent disk in an inside of the container, a drive device configured to rotate the reagent disk in a horizontal direction, and a fan provided to the reagent disk in a direction in which air can be blown in the rotation direction of the reagent disk.

## Description

### Technical Field

The present disclosure relates to a reagent cooling box and an automatic analysis device including the reagent cooling box.

### Background Art

As a nucleic acid amplification technique used in testing a nucleic acid contained in a biological sample, there is a technique using polymerase chain reaction (PCR) method. The PCR method is a technique in which a heatresistant polymerase and a primer are used and temperature rise and fall cycles are repeated many times, thereby geometrically amplifying a target nucleic acid. The PCR method is widely used in fields such as genetic engineering or biological test methods and detection methods.

A genetic testing device that performs PCR fully automatically is known. Generally, the genetic testing device does not operate continuously day and night. For example, the power is turned on in the morning, and the power is turned off after about 8 hours of operation. During the operation of the genetic testing device, a plurality of test items are tested in parallel, and thus a PCR reagent is stored in the device. When the PCR reagent is stored for a long time after being prepared, the reagent is subjected to refrigeration storage in principle in order to suppress nonspecific amplification during the amplification using the PCR reagent, to prevent deterioration of the reagent itself, or the like. Therefore, after the genetic testing device is operated, the reagent to be used is taken out from a refrigerator and set in the device.

When the PCR reagent is stored in the device at room temperature for about 8 hours or more, there is a possibility that the PCR may be affected by deterioration of the reagent or concentration due to drying. From this, a technique has conventionally been studied in which a reagent storage is mounted in a device and a PCR reagent is cooled in the reagent storage.

For example, PTL 1 discloses a technique in which: "There are provided a reagent box 30 having a reagent case 36 provided with an opening for storing a reagent vessel 6 holding a first reagent and a reagent cover 37 for sealing the opening, a ventilation unit 31 that ventilates the air in the reagent box 30, and a cooler 35 that cools the inside of the reagent box 30, in which the first reagent in the reagent vessel 6 stored in the reagent box 30 and external air flowing into the reagent box 30 by the ventilation unit 31 are cooled via the reagent case 36". According to the method of PTL 1, it is possible to prevent analysis data from deteriorating due to contamination by the components having been evaporated from the reagent (see ABSTRACT of PTL 1).

PTL 2 discloses a technique in which: "The inside of a reagent cooling box 119 of an automatic analysis device is surrounded by a triple wall structure, a cooled fluid (cooling water 122d) is circulated inside the triple wall structure, and air (cooling air 121b) cooled by heat exchange is directly introduced into the reagent cooling box 119, thereby performing efficient cooling by a compact device. Furthermore, by making the inside of the reagent cooling box 119 have a pressure equal to or higher than the atmospheric pressure by the cooling air 121b, it is prevented that the cold air is blown out of a reagent aspiration hole 113 and the outside air flows in from the reagent aspiration hole 113, thereby suppressing occurrence of dew condensation in the reagent cooling box 119" (see ABSTRACT of PTL 2).

PTL 3 describes that "a reagent cooling box that prevents occurrence of dew condensation and further uniformizes a temperature in the cooling box is provided with low power consumption and a simple structure. There are included a refrigerant pipe that is installed inside an outer wall of a reagent cooling box 103 and causes a refrigerant to flow inside the outer wall, a blowing pipe 109 that is installed inside the outer wall and guides the outside air present outside the reagent cooling box to the inside of the reagent cooling box, and a blowing means 114 that is installed in the blowing pipe and causes the outside air to diffuse into the reagent cooling box through the blowing pipe. The outside air cooled by the outer wall and taken into the reagent cooling box makes the reagent cooling box have a positive pressure and a uniform internal temperature" (see ABSTRACT of PTL 3).

PTL 4 discloses a technique in which: "The inside of a reagent cooling box 300 is provided with a blower 340 that circulates the air inside the reagent cooling box 300, the blower 340 has a blowing port directed obliquely downward toward a bottom surface 370 of the reagent cooling box, and the blower 340 blows air toward the bottom surface 370 of the reagent cooling box 300" (see ABSTRACT of PTL 4).

### Citation List

### Patent Literatures

PTL 1: JP 2012-112730 A
PTL 2: JP 2013-185980 A
PTL 3: WO 2020/255488 A
PTL 4: JP 2015-64220 A

### Summary of Invention

### Technical Problem

However, in the reagent cooling box of PTL 1, the cooled air from a central axis side is introduced, and thus the cooled air cannot be guided uniformly in the circumferential direction. Consequently, cooling unevenness occurs in the circumferential direction unless a reagent tray is always rotated.

In the method of PTL 2, an airflow along the bottom surface of the reagent cooling box is created. Thus, it is impossible to eliminate a temperature distribution in which the temperature is high in the upper portion and low in the lower portion, which convection in the vertical direction is less likely to occur. Therefore, it is difficult to uniformize the temperature in the reagent cooling box.

In PTL 3, the magnitude of the flow velocity in the circumferential direction in the reagent cooling box is affected by the positional relationship between the inlet port and aspiration port of the cooled air. Therefore, the temperature in the reagent cooling box is less likely to be uniform.

In PTL 4, the installation direction of a fan is for the purpose of generating an airflow at the upper surface carry-in/out port. Therefore, it is difficult to uniformize the temperature and occurrence of dew condensation in the circumferential direction in the reagent cooling box.

Therefore, the present disclosure provides a technique in which the inside of a reagent cooling box is efficiently stirred and a temperature distribution is uniformized.

### Solution to Problem

A reagent cooling box of the present disclosure includes a reagent disk configured to hold a plurality of reagent vessels that holds reagents, a container configured to store the reagent disk in an inside of the container, a drive device configured to rotate the reagent disk in a horizontal direction, and a fan provided to the reagent disk in a direction in which air can be blown in the rotation direction of the reagent disk.

Further features related to the present disclosure will become apparent from the description of the present description and the accompanying drawings. Aspects of the present disclosure are achieved and realized by elements, combinations of various elements, and aspects of the following detailed description and appended claims. The description of the present description is merely exemplary, and does not limit the scope of claims or application examples of the present disclosure in any sense.

### Advantageous Effects of Invention

According to the technique of the present disclosure, it is possible to efficiently stir the inside of the reagent cooling box and to uniformize a temperature distribution. Problems, configurations, and advantageous effects other than those described above will be clarified by the following description of embodiments.

### Brief Description of Drawings

[FIG. 1] FIG. 1 is a schematic plan view illustrating a configuration of an automatic analysis device according to a first embodiment.
[FIG. 2] FIG. 2 is a cross-sectional view illustrating a configuration of a reagent cooling box according to the first embodiment.
[FIG. 3] FIG. 3 is a transverse cross-sectional view for explaining a positional relationship among constituent elements of the reagent cooling box.
[FIG. 4] FIG. 4 is a circumferential development view for explaining a method for mounting an axial fan on a reagent disk.
[FIG. 5] FIG. 5 is a circumferential development view for explaining effects of the axial fan.
[FIG. 6] FIG. 6 is a graph showing a temperature change at each measurement point when the axial fan is not operated.
[FIG. 7] FIG. 7 is a graph showing a temperature change at each measurement point when the axial fan is operated.
[FIG. 8] FIG. 8 is a graph showing a temperature change in the reagent cooling box when a lid is opened from a cooled state and the lid is closed again.

### Description of Embodiments

### [First Embodiment]

### <Configuration Example of Automatic Analysis Device>

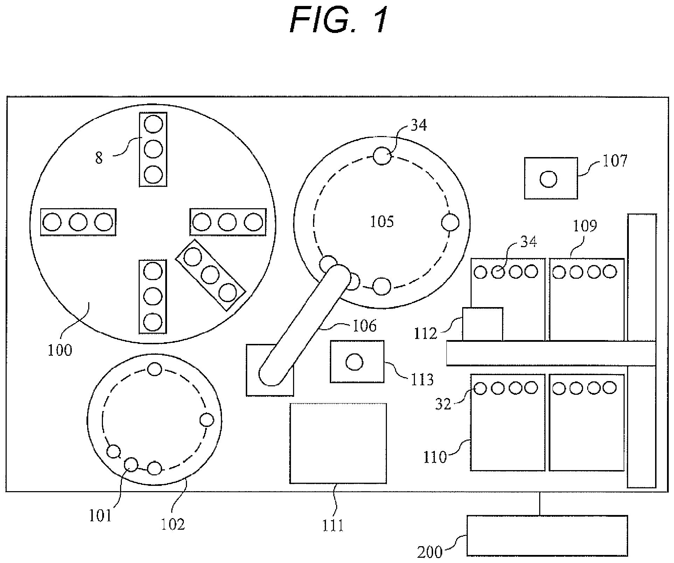

FIG. 1 is a schematic plan view illustrating an automatic analysis device according to a first embodiment. As illustrated in FIG. 1, the automatic analysis device includes a reagent cooling box 100, a specimen vessel disk 102, an incubator disk 105, a pipetting mechanism 106, a detection unit 107, a reaction vessel storage unit 109, a pipetting tip storage unit 110, a disposal unit 111, a conveyance device 112, a pipetting tip attachment unit 113, and a controller 200.

The specimen vessel disk 102 stores a plurality of specimen vessels 101 for holding biological samples (hereinafter, referred to as specimens) such as blood and urine. The reagent cooling box 104 stores a plurality of reagent vessels 8 for holding various reagents to be used for analysis of specimens. The incubator disk 105 stores a plurality of reaction vessels 34 for reacting the specimens with the reagents.

The pipetting mechanism 106 drives a probe (not illustrated in FIG. 1) provided to an arm that rotates around a rotation shaft to perform aspiration and discharge movements. By this movements, the pipetting mechanism 106 pipets the specimen from the specimen vessel 101 to the reaction vessel 34 and pipets the reagent from the reagent vessel 8 to the reaction vessel 34. The detection unit 107 detects the characteristics of a reaction liquid of the specimen and the reagent that have been pipetted into the reaction vessel 34.

The controller 200 is, for example, a computer device, and controls the operation of the entire automatic analysis device. In addition, the controller 200 receives a detection result from the detection unit 107 and analyzes a substance to be measured in the specimen.

A plurality of the reaction vessels 34 unused are stored in the reaction vessel storage unit 109. A plurality of pipetting tips 32 unused are stored in the pipetting tip storage unit 110. The reaction vessel 34 and the pipetting tip 32 that have been used are discarded in the disposal unit 111.

The conveyance device 112 includes an actuator that grips the reaction vessel 34 and the pipetting tip 32 and is movable in three axial directions. The conveyance device 112 conveys the reaction vessel 34 stored in the reaction vessel storage unit 109 to the incubator disk 105. The conveyance device 112 conveys the pipetting tip 32 stored in the pipetting tip storage unit 110 to the pipetting tip attachment unit 113. The conveyance device 112 discards the used reaction vessel 34 into the disposal unit 111. The pipetting tip 32 is attached to the tip of the probe of the pipetting mechanism 106 in the pipetting tip attachment unit 113.

### <Configuration Example of Reagent Cooling Box>

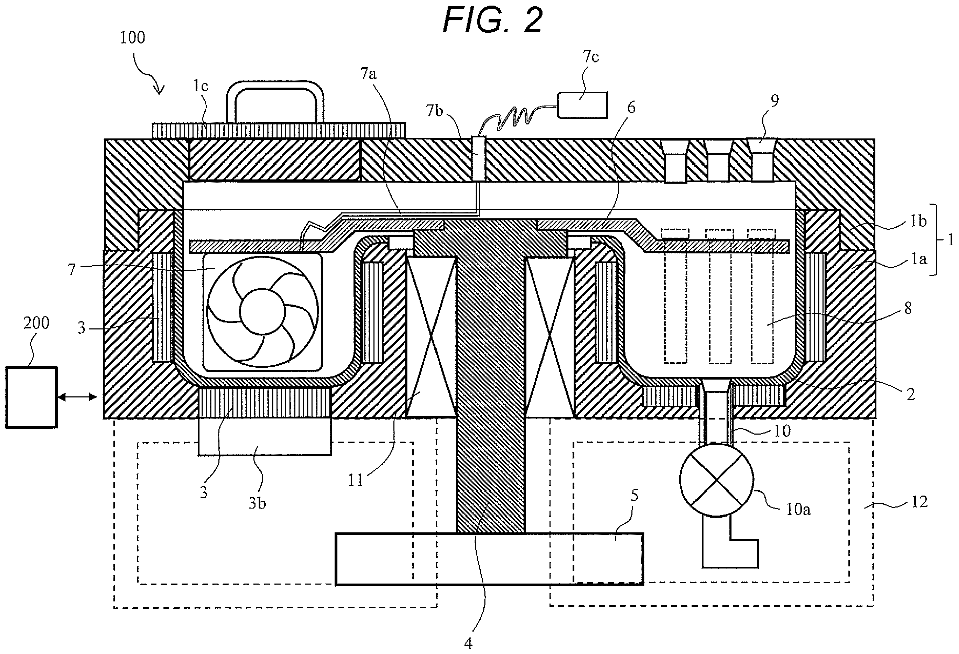

FIG. 2 is a cross-sectional view illustrating a configuration of the reagent cooling box 100 according to the first embodiment. As illustrated in FIG. 2, the reagent cooling box 100 includes a heat insulating container 1, a heat absorbing container 2, a heat removing means 3, a heat dissipating means 3b, a rotation shaft 4, a rotational positioning means 5, a reagent disk 6, an axial fan 7, the reagent vessel 8, a pipetting pit 9, a drain port 10, a bearing shaft sealing means 11, and a support base 12. The reagent cooling box 100 is connected to the controller 200.

The heat insulating container 1 is a housing of the reagent cooling box 100. The heat insulating container 1 can be manufactured, for example, by molding an outer shell with a plastic mold and filling the inside of the outer shell with a heat insulating material such as styrofoam. In a case where durability is not considered, the outer shell may not be provided. The heat insulating container 1 includes a lower heat insulating container 1a and an upper heat insulating container 1b. The upper heat insulating container 1b covers the upper side of the opening of the lower heat insulating container 1a. By dividing and manufacturing the heat insulating container 1 in this manner, it is easy to disassemble and assemble the reagent cooling box 100 and to maintain the inside thereof. The joint portion between the lower heat insulating container 1a and the upper heat insulating container 1b can maintain sealability by employing, for example, a spigot structure as illustrated in FIG. 2. The upper heat insulating container 1b has a lid 1c that is detachable. A portion, fitted to the upper heat insulating container 1b, of the lid 1c can be formed of the same material as that of the upper heat insulating container 1b.

The heat absorbing container 2 can be manufactured by processing a sheet material of metal (e.g., copper) having high thermal conductivity by a sheet metal process or canmanufacturing process. As illustrated in FIG. 2, the vertical cross-sectional shape of the heat absorbing container 2 is U-shaped at both ends, and the upper portion is open. As will be described later, the planar shape of the heat absorbing container 2 is circular, and a concentric pit is provided at the center. That is, the heat absorbing container 2 defines a ring-shaped space with an open upper portion.

The heat removing means 3 is provided on the bottom surface and side surface of the heat absorbing container 2. The heat removing means 3 may be a pipe that causes a refrigerant to flow through, a thermoelectric element (socalled Peltier element), or the like. Although not illustrated, a refrigerant whose temperature is kept constant can be supplied from the outside to the pipe that causes the refrigerant to flow through. In a case where the heat removing means 3 is a refrigerant pipe, the refrigerant pipe or the like can be wrapped with a heat insulating material at a portion taken out from the heat insulating container 1 to the outside. Accordingly, the heat insulating property of the inside of heat insulating container 1 can be maintained.

In FIG. 2, in a case where the heat removing means 3 provided on the bottom surface of the heat absorbing container 2 is a Peltier element, a heat dissipation surface on the side opposite to the side in contact with the heat absorbing container 2 has a high temperature. Therefore, by installing the heat dissipating means 3b on the outer bottom surface of the heat insulating container 1, heat can be dissipated from the heat dissipation surface of the heat removing means 3.

The heat removing means 3 may be in close contact with the heat absorbing container 2 with thermally conductive grease interposed therebetween so as to obtain favorable heat conduction, or may be joined to the heat absorbing container 2 by brazing. The heat absorbing container 2 and the heat removing means 3 can be stored in the heat insulating container 1 as a structure in which the heat absorbing container 2 and the heat removing means 3 are integrated. The heat insulating container 1 does not need to be in close contact with the integrated structure of the heat absorbing container 2 and the heat removing means 3. An appropriate air layer may be present between the heat insulating container 1 and the integrated structure. However, by preventing this air layer from communicating with the outside, the heat insulating property of the inside of the heat insulating container 1 can be maintained.

The rotational positioning means 5 includes, for example, a motor, such as a stepping motor, and a gear. The rotational positioning means 5 rotates the rotation shaft 4. The reagent disk 6 is fixed to the rotation shaft 4 and rotates with the rotation of the rotation shaft 4. A gap is provided between the rotation shaft 4 and the heat absorbing container 2. The reagent disk 6 is configured to be able to suspend and hold the plurality of reagent vessels 8. A user can open the lid 1c and set the reagent vessel 8 on the reagent disk 6.

The rotation shaft 4 is rotatably restrained by the bearing shaft sealing means 11. The heat absorbing container 2, the reagent disk 6, and the rotation shaft 4 are arranged coaxially in the vertical direction. These make it possible to prevent interference between the heat absorbing container 2 and the reagent vessel 8 due to the rotation of the reagent disk 6. The bearing shaft sealing means 11 is arranged between the heat insulating container 1 and the rotation shaft 4, so that communication between the air inside the reagent cooling box 100 and the outside air is prevented. The bearing shaft sealing means 11 can include, for example, a rolling bearing and a mechanical seal or labyrinth seal.

The axial fan 7 is fixed to the reagent disk 6 and rotates in the heat absorbing container 2 along with the rotation of the reagent disk 6. In other words, the reagent disk 6 supports the reagent vessel 8 and the axial fan 7 such that the bottom of the reagent vessel 8 and the axial fan 7 are positioned below the reagent disk 6. Therefore, the axial fan 7 does not collide with the reagent vessel 8 suspended on the reagent disk 6.

The axial fan 7 is a fan in which the aspiration direction and the discharge direction are on a straight line, and an area on the aspiration side is equal to an area on the discharge side. As long as the aspiration direction and the discharge direction are on a straight line and an area on the aspiration side is equal to an area on the discharge side, the type of the fan is not limited to the axial fan 7. Instead of the axial fan 7, for example, a mixed flow fan or a sirocco fan can be used. Details of the arrangement of the axial fan 7 will be described later. FIG. 2 illustrates the axial fan 7 having a quadrangular frame as an example. Alternatively, the axial fan 7 may have a cylindrical frame or no frame. By using the axial fan 7 having such a size that a projected area in the axial direction including the frame of the axial fan 7 is 50% or more of the cross-sectional area in the heat absorbing container 2, the inside of the reagent cooling box 100 can be efficiently cooled.

The axial fan 7 is connected to an external power supply 7c via wiring 7a, and ON/OFF of the axial fan 7 is controlled by the power supply 7c. The upper heat insulating container 1b is provided with a connector 7b, and the wiring 7a can be attached and detached at the connector 7b. By removing the wiring 7a, the disassembly, assembly, and maintenance of the reagent cooling box 100 are facilitated. The driving force of the axial fan 7 may be a battery, and the battery may be mounted on the reagent disk 6.

The wiring 7a is twisted in the reagent cooling box 100 with the rotation of the reagent disk 6. However, the reagent disk 6 can be rotated both forward and backward by the rotational positioning means 5 and has a movable range of about two rotations in one direction at the maximum. Thus, there is no problem even if the wiring 7a is fixed as long as the wiring 7a is a normal vinyl covered cable. In a case where the reagent disk 6 can rotate only in one direction or the movable range of the reagent disk 6 in one direction is large, the connector 7b may be replaced by a rotary connector.

The pipetting pit 9 is provided in the upper heat insulating container 1b, so that a reagent in the reagent vessel 8 can be pipetted by inserting a pipetting pipette into the pipetting pit 9 from the outside.

The drain port 10 is provided in the bottom surface of the heat absorbing container 2 and discharges dew condensation water produced in the reagent cooling box 100. The drain port 10 is provided with a cock valve 10a. The cock valve 10a is closed while the inside of the reagent cooling box 100 is being cooled and is opened after the operation is finished, thereby discharging the dew condensation water. If the cooling is performed with the cock valve 10a opened, heavy air that has been cooled and has an increased density is discharged downward from the drain port 10. This generates a flow in which outside air having a high temperature is drawn into the reagent cooling box 100 from the pipetting pit 9, and thus the temperature in the reagent cooling box 100 is raised at once.

The support base 12 supports the heat insulating container 1 and the rotational positioning means 5.

The controller 200 controls the drive of the rotational positioning means 5, the ON/OFF control of the power supply 7c, and the drive of the cock valve 10a. The controller 200 may be a controller that controls the operation of the entire automatic analysis device on which the reagent cooling box 100 is mounted, or may be a controller dedicated to the reagent cooling box 100. Instead of the control by the controller 200, a user may manually control the drive of the rotational positioning means 5, the ON/OFF control of the power supply 7c, and the drive of the cock valve 10a.

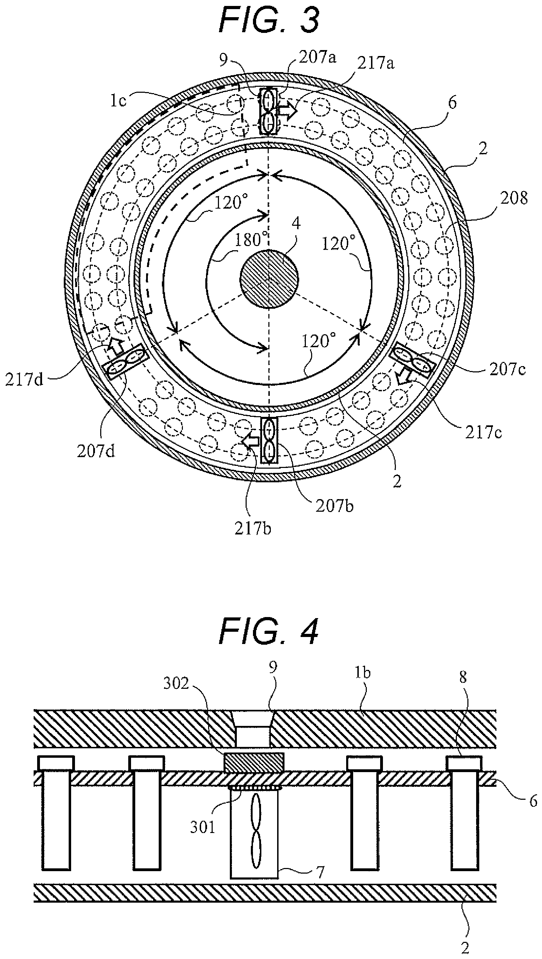

FIG. 3 is a transverse cross-sectional view for explaining a positional relationship among constituent elements of the reagent cooling box 100. In the reagent disk 6, two set positions 208 for the reagent vessels 8 are provided in each radial direction. At the time of pipetting the reagent, the set position 208 for the reagent vessel 8 and the pipetting pit 9 are arranged on the same radius. The circumferential position of the set position 208 for the reagent vessel 8 is not particularly limited as long as it can be positioned under the pipetting pit 9 by the drive of the rotational positioning means 5. The pipetting pit 9 is provided only on one radius in FIG. 3, but the pits may be provided on a plurality of radii.

In a case where two axial fans 7 are provided, the axial fans 7 can be mounted at positions having a central angle of 180°, such as mounting positions 207a and 207b. In a case where three axial fans 7 are provided, the axial fans 7 can be mounted at positions having a central angle of 120°, such as mounting positions 207a, 207c, and 207d. In a case where a plurality of axial fans 7 having the same performance are provided as described above, the fans are arranged at equal intervals, thereby stirring the air in the reagent cooling box 100 uniformly. The number of the axial fans 7 may be one.

Air blowing directions 217a to 217d of the axial fans 7 are indicated by arrows. A plurality of the axial fans 7 are arranged so as to blow air in the same circumferential direction. In a case where a plurality of the axial fans 7 are used, the drive voltages are set to be equal such that the operating conditions of the axial fans 7 are the same, and ON/OFF controls are also simultaneously performed.

In FIG. 3, the lid 1c is indicated by a thick dotted line. The lid 1c covers an upper portion of a partial region of the heat absorbing container 2. In a case where the axial fan 7 is continuously being operated when a user sets the reagent vessel 8 on the reagent disk 6, the reagent disk 6 is rotated and positioned as illustrated in FIG. 3, so that the axial fan 7 is not positioned under the lid 1c, thereby ensuring that the user is safe.

FIG. 4 is a circumferential development view for explaining a method for mounting the axial fan 7 on the reagent disk 6. The axial fan 7 is fixed to the reagent disk 6 by a fixing means 301. As a fixing method of the fixing means 301, for example, fastening by a screw, caulking using elastic deformation, or the like can be used. While the reagent is not being pipetted from the reagent vessel 8, the reagent disk 6 is held by the rotational positioning means 5 such that the axial fan 7 is positioned immediately under the pipetting pit 9, as illustrated in FIG. 4. Accordingly, the reagent stored in the reagent cooling box 100 is less likely to be affected by the air outside the reagent cooling box 100. During the cooling, the pipetting pit 9 is in a stably stratified state in which the lower portion is at a low temperature and the upper portion is at a low temperature, and thus mixing with the outside air due to natural convection is less likely to occur. In order to further eliminate the influence of mixing with the outside air due to natural convection, a spacer 302 is installed at a position facing the pipetting pit 9 on the reagent disk 6 above the axial fan 7 and a communication portion between the inside and outside of the reagent cooling box 100 is made as small as possible. The spacer 302 is formed of a heat insulating material such as heat insulating plastic.

### <Verification of Effects of Axial Fan>

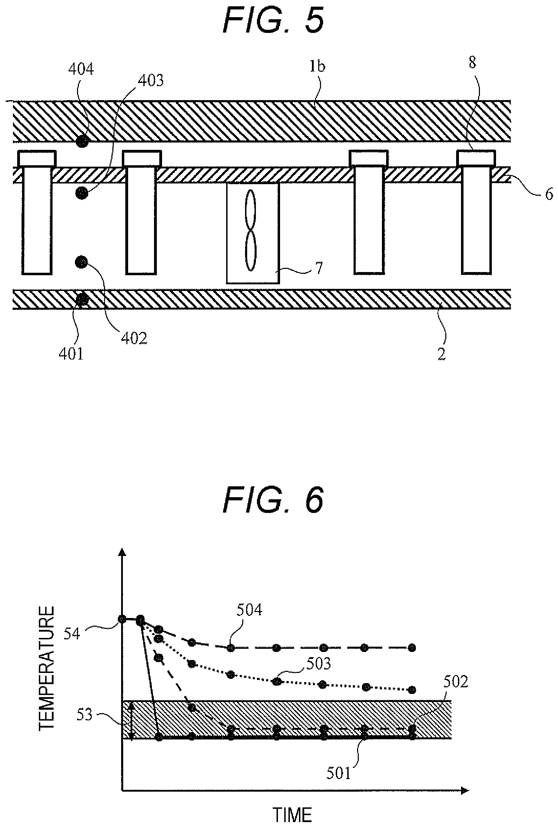

FIG. 5 is a circumferential development view for explaining effects of the axial fan of the first embodiment. Temperatures at four measurement points 401 to 404 illustrated in FIG. 5 were measured in each of a case where the axial fan 7 was operated during the cooling of the reagent cooling box 100 and a case where the axial fan 7 was not operated. The measurement point 401 is a measurement point for the temperature of the heat absorbing container 2. The measurement point 402 is a measurement point for the temperature of the lower side of the internal space of the heat absorbing container 2. The measurement point 403 is a measurement point for the temperature on the upper side of the internal space of the heat absorbing container 2. The measurement point 404 is a measurement point for the temperature of the bottom surface of the upper heat insulating container 1b.

FIG. 6 is a graph showing a temperature change at each measurement point when the axial fan 7 is not operated. The vertical axis represents temperature, and the horizontal axis represents elapsed time. A cooling temperature range 53 indicates a target temperature for cooling the reagent by the reagent cooling box 100. Plots 501 show measurement results of the temperature at the measurement point 401. Plots 502 show measurement results of the temperature at the measurement point 402. Plots 503 show measurement results of the temperature at the measurement point 403. Plots 504 show measurement results of the temperature at the measurement point 404. At any of the measurement points 401 to 404, the measurement is started from a room temperature 54 at the start of the measurement.

When the axial fan 7 is not operated, the plots 502 showing the temperature change on the lower side of the internal space of the heat absorbing container 2 shows that the temperature quickly lowers and falls within the cooling temperature range 53, as shown in FIG. 6. On the other hand, the plots 504 showing the temperature change on the upper side of the internal space of the heat absorbing container 2 shows that the rate of temperature lowering was slow and the temperature did not reach the cooling temperature range 53 in the display range of the graph. From this, it has been found that, when the axial fan 7 is not operated, a temperature gradient occurs in the internal space of the heat absorbing container 2.

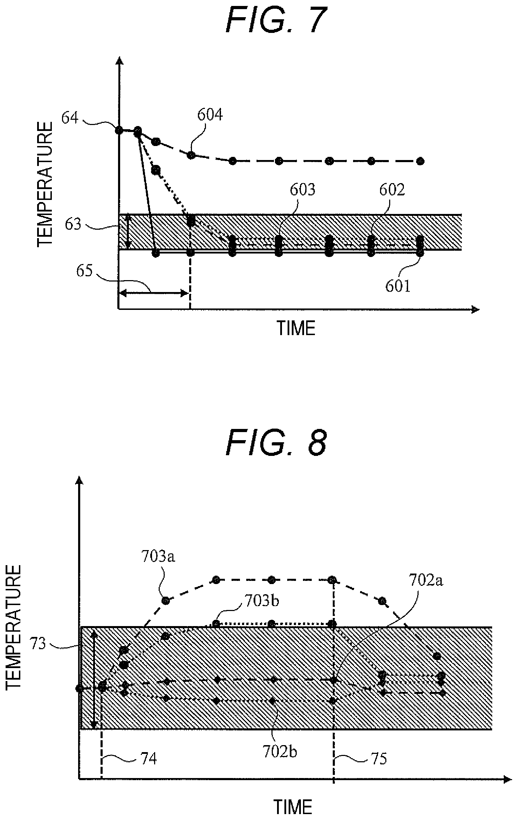

FIG. 7 is a graph showing a temperature change at each measurement point when the axial fan 7 is operated. The display range (scale) in FIG. 7 is the same as that in FIG. 6. A cooling temperature range 63 indicates a target temperature for cooling the reagent by the reagent cooling box 100. Plots 601 show measurement results of the temperature at the measurement point 401. Plots 602 show measurement results of the temperature at the measurement point 402. Plots 603 show measurement results of the temperature at the measurement point 403. Plots 604 show measurement results of the temperature at the measurement point 404. At any of the measurement points 401 to 404, the measurement is started from a room temperature 64 at the start of the measurement.

When the axial fan 7 is operated, change at substantially the same temperature is found in the plots 603 showing the temperature change on the upper side of the internal space of the heat absorbing container 2 and the plots 602 showing the temperature change on the lower side of the internal space of the heat absorbing container 2, as shown in FIG. 7. It has been found that the temperature gradient is eliminated. Both the plots 602 and the plots 603 fall within the cooling temperature range 63 at a certain time 65, and high-speed cooling is achieved.

### <Summary of First Embodiment>

As described above, the reagent cooling box 100 according to the first embodiment includes the reagent disk 6 configured to hold a plurality of the reagent vessels 8 that hold reagents, the heat absorbing container 2 and the heat insulating container 1 (container) configured to store the reagent disk 6 in an inside of the container, the rotational positioning means 5 (drive device) configured to rotate the reagent disk 6 in the horizontal direction, and the axial fan 7 (fan) provided to the reagent disk 6 in a direction in which air can be blown in the rotation direction of the reagent disk 6.

By blowing air with the axial fan 7 mounted with its axis directed in the circumferential direction of the reagent disk 6, as described above, a primary circulation flow is generated in the reagent cooling box 100. This circulation flow has only a pressure loss due to colliding with the reagent vessel 8 and has no pressure loss due to a fixed flow path such as a suction/discharge pipe. Accordingly, the maximum wind speed that can be obtained by the axial fan 7 can be realized. In addition, the reagent vessel 8 is present in the middle of the circulation flow, and thus a complicated secondary flow is generated when the circulation flow collides with the reagent vessel 8. Accordingly, the air is stirred not only in the circumferential direction but also in the vertical direction, and thus the temperature distribution in the reagent cooling box 100 is uniformized. As a result, the heat transfer coefficient at the heat absorbing surface of the inner surface of the reagent cooling box 100 increases, and the amount of heat (per unit time) to be transferred from the air to the container of the reagent cooling box 100 increases. Therefore, the air in the reagent cooling box 100 can be efficiently stirred. Consequently, the time can be shortened between the turning on of power and the cooling of the temperature in the reagent cooling box 100 from the room temperature to the refrigeration temperature of the reagent.

### [Second Embodiment]

In a second embodiment, described is a method for driving the axial fan 7 when the lid 1c is opened and closed.

When the lid 1c is opened and closed when the reagent vessel 8 is set on the reagent disk 6, the outside air enters the reagent cooling box 100, and thus the temperature in the reagent cooling box 100 rises. Therefore, in the reagent cooling box 100 of the present embodiment, the axial fan 7 is stopped before the lid 1c is opened, and the blowing by the axial fan 7 is resumed after the lid 1c is closed. Accordingly, it is possible to return early from the temperature rise caused by the opening and closing of the lid 1c. This is because the vertical convection can be suppressed by generating a temperature gradient (temperature distribution) in the vertical direction without stirring the air by the blowing by the axial fan 7 when the lid 1c is opened, so that the heat exchange due to the replacement by the entry of the outside air can be minimized. In addition, the temperature gradient and the temperature rise caused by the opening of the lid 1c can be quickly eliminated when the lid 1c is closed by the effects of the increase in the heat transfer coefficient at the heat absorbing surface of the inner surface of the reagent cooling box 100 and the uniformization of the temperature distribution by the stirring of the air.

Hereinafter, described is a result of an experiment in which the lid 1c was opened and closed and a temperature change in the reagent cooling box 100 was measured in each of a state where the axial fan 7 was operated and a state where the axial fan 7 was not operated.

FIG. 8 is a graph showing a temperature change in the reagent cooling box 100 when the lid 1c is opened from a cooled state and the lid 1c is closed again. Similarly to FIGS. 6 and 7, the vertical axis represents temperature, and the horizontal axis represents elapsed time. A cooling temperature range 73 is the same temperature range as the cooling temperature range 53 of FIG. 6 and the cooling temperature range 63 of FIG. 7. Plots 702a and 702b show measurement results of the temperature at the measurement point 402. Plots 703a and 703b show measurement results of the temperature at the measurement point 403.

During the time period until a timing 74, the reagent cooling box 100 is operated at a cooling temperature, and the axial fan 7 is driven. The plots 702a and 703a show temperature changes when the lid 1c is opened at the timing 74 and closed at a timing 75 while the axial fan 7 is operated. On the other hand, the plots 702b and 703b show temperature changes when the axial fan 7 is stopped immediately before the timing 74 at which the lid 1c is opened and the operation of the axial fan 7 is resumed immediately after the lid 1c is closed at the timing 75.

As is clear from the results shown in FIG. 8, the temperature rise in the plot 703b is smaller than the temperature rise in the plot 703a, and the temperature returns faster. From this, it has been found that, by stopping the axial fan 7 when the lid 1c is opened and operating the axial fan 7 when the lid 1c is closed, it is possible to quickly cool the reagent cooling box 100 to the cooling temperature even if the temperature in the reagent cooling box 100 rises.

### [Modification]

The present invention is not limited to the embodiments described above, and includes various modifications. For example, the above-described embodiments have been described in detail for easy understanding of the present disclosure, and do not necessarily have all the described configurations. In addition, a part of one embodiment can be replaced with a configuration of another embodiment. In addition, the configuration of another embodiment can be added to the configuration of one embodiment. In addition, for a part of the configuration of each embodiment, a part of the configuration of another embodiment can be added, deleted, or substituted.

### Reference Signs List

- 1: heat insulating container
- 2: heat absorbing container
- 3: heat removing means
- 4: rotation shaft
- 5: rotational positioning means
- 6: reagent disk
- 7: axial fan
- 8: reagent vessel
- 9: pipetting pit
- 10: drain port
- 11: bearing shaft sealing means
- 100: reagent cooling box
- 200: controller

## Claims

1. A reagent cooling box comprising:
a reagent disk configured to hold a plurality of reagent vessels that holds reagents;
a container configured to store the reagent disk in an inside of the container;
a drive device configured to rotate the reagent disk in a horizontal direction; and
a fan provided to the reagent disk in a direction in which air can be blown in a rotation direction of the reagent disk.

2. The reagent cooling box according to claim 1, wherein in the fan, an aspiration direction and a discharge direction are on a straight line, and an area on an aspiration side is equal to an area on a discharge side.

3. The reagent cooling box according to claim 1, wherein the fan is any one of an axial fan, a mixed fan, or a sirocco fan.

4. The reagent cooling box according to claim 1, wherein a plurality of the fans are provided to the reagent disk at equal intervals so as to have the same air blowing direction.

5. The reagent cooling box according to claim 1, wherein
the fan is installed below the reagent disk, and
the reagent cooling box further comprises a spacer provided between an upper surface of the reagent disk above the fan and the container.

6. The reagent cooling box according to claim 1, wherein the reagent disk supports the reagent vessel and the fan such that a bottom of the reagent vessel and the fan are positioned below the reagent disk.

7. The reagent cooling box according to claim 1, wherein the container includes:
a thermally conductive heat absorbing container that has an opening in an upper portion and stores the reagent disk;
a heat insulating container that stores the heat absorbing container; and
a lid provided above the opening.

8. The reagent cooling box according to claim 7, wherein the container further includes a heat removing device provided on a side surface or bottom surface of the heat absorbing container.

9. The reagent cooling box according to claim 1, further comprising a controller configured to control drive of the fan, wherein
the container includes a lid, and
the controller is configured to stop the fan when the lid is opened in a cooled state of the container, and operate the fan after the lid is closed.

10. An automatic analysis device comprising the reagent cooling box according to claim 1.
